# EUROPÄISCHE PATENTSCHRIFT

(11) **EP 2 897 260 B1**
(45) Veröffentlichungstag und Bekanntmachung des Hinweises auf die Patenterteilung: **04.09.2019**
(21) Anmeldenummer: 15150771.2
(22) Anmeldetag: 12.01.2015
(51) Int. Cl.: H02K 5/20, H02K 9/06, H02K 11/00, H02K 5/10, H02K 5/26, H02K 5/02, H02K 9/02, H02K 5/22, H02K 11/33, H02K 7/14

(54) **Motorgehäuse**
Motor housing
Carter moteur

(30) Priorität: 17.01.2014 DE 102014200763
(43) Veröffentlichungstag der Anmeldung: 22.07.2015
(73) Patentinhaber: ebm-papst Mulfingen GmbH & Co. KG, 74673 Mulfingen (DE)
(72) Erfinder: Müller, Rainer, 74639 Zweiflingen-Pfahlbach (DE); Hennegriff, Matthias, 74747 Ravenstein (DE); Rückert, Christian, 97922 Lauda-Königshofen (DE)
(74) Vertreter: Jostarndt Patentanwalts-AG

(56) Entgegenhaltungen:
- EP-A1- 1 768 236
- EP-A1- 2 654 183
- DE-A1-102006 016 252
- DE-A1-102011 112 817
- FR-A1- 2 969 413
- US-A1- 2009 015 082

## Beschreibung

Die Erfindung betrifft ein Motorgehäuse eines einen Stator aufweisenden Elektromotors sowie einen Elektromotor mit Gehäuse.

Solche Elektromotoren werden insbesondere zum Antrieb eines Lüfterrades innerhalb einer Lüftungseinheit verwendet, wobei sich die Bauteile des Elektromotors während des Betriebs erwärmen und dadurch schneller verschleißen und außerdem der Wirkungsgrad des Elektromotors durch die Erwärmung reduziert wird. Gattungsgemäße Elektromotoren weisen einen mit Motorwicklungen ausgestatteten Stator und einen diesen umfassenden als Außenläufer ausgebildeten Rotor sowie ein Motorgehäuse, mit Gehäuseunterteil, einem Gehäuseoberteil sowie einer zwischen dem Gehäuseunterteil und dem Gehäuseoberteil angeordneten Motorelektronik auf. Die Bauelemente der Motorelektronik können auf einer Platine angeordnet sein. Aus der europäischen Offenlegungsschrift EP 2 654 183 A1 der Anmelderin ist ein gattungsgemäßer Elektromotor bekannt, bei dem sich das Gehäuseunterteil oberhalb des Stators in Richtung Gehäuseoberteil tellerförmig ausdehnt, so dass es gemeinsam mit dem Gehäuseoberteil die Platine der Motorelektronik mit den elektronischen Bauelementen aufnehmen kann. Gehäuseober- und Gehäuseunterteil werden üblicherweise miteinander ververbunden, so dass die sich zwischen den Gehäuseteilen befindende Motorelektronik zwischen den Gehäuseteilen eingespannt wird. Die elektronischen Bauelemente und die Platine können von der Luft im Motorgehäuseinneren umgeben sein. Auch die Elektronik solcher gattungsgemäßer Elektromotoren erwärmt sich im Betrieb, wodurch auch sie schneller verschleißen kann. Darüber hinaus kann die Temperatur auch soweit ansteigen, dass einzelne Bauteile versagen können, wodurch es zu einer Fehlfunktion des Elektromotors kommen kann. Zur Kühlung der Bauelemente ist es bekannt, in das Gehäuseoberteil Öffnungen zur Luftzirkulation einzubringen. Nachteilig ist dabei, dass Schmutz und/oder Feuchtigkeit durch die Öffnungen in das Gehäuse eindringen können, wodurch es zu Fehlfunktionen der Baugruppe kommen kann.

Wird ein hoher Schutz gegen Feuchtigkeit und/oder Staub gefordert, können solche Öffnungen nicht vorgesehen werden. Darüber hinaus kann bei hohen Schutzanforderungen gegen Feuchtigkeit und/oder Staub der Stator mit einer Vergußmasse vergossen oder einer Umspritzungsmasse umspritzt werden und darüber hinaus die Gehäuseteile durch eine Dichtung gegeneinander abgedichtet sein.

Die französische Offenlegungsschrift FR 2 969 413 A1 offenbart ein Motorgehäuse mit einem Gehäuseunterteil und mit einem Gehäuseoberteil eines einen Stator aufweisenden Elektromotors, wobei in dem Gehäuseunterteil mindestens eine Kühlungsöffnung angeordnet ist und in dem Gehäuse eine Elektronik anordnenbar ist, wobei die Kühlungsöffnung zum Zweck der Kühlung der Elektronik eine Luftleiteinrichtung aufweist.

Die europäische Offenlegungsschrift EP 1 768 236 A1 offenbart eine rotierende elektrische Maschine mit einem eingebauten Steuergerät, wobei das Steuergerät gegenüber dem Hauptkörper der rotierenden elektrischen Maschine wärmeisoliert ist und gekühlt werden kann, wobei Kühlluft über einen Ventilator dem Steuergerät zuführbar ist.

Nachteilig bei solchen Motorgehäusen ist, dass je nach gefordertem Schutz gegen Staub und/oder Feuchtigkeit unterschiedliche Gehäuseteile mit oder ohne Entlüftungsöffnungen verwendet werden müssen.

Aufgabe der Erfindung ist die Angabe eines Motorgehäuses eines einen Stator aufweisenden Elektromotors mit einer Multifunktionsöffnung in dem Gehäuseunterteil, wodurch im Falle niedriger Schutzansprüche eine aktive Kühlung der Motorelektronik im Gehäuseinneren ermöglicht und andererseits im Falle einer Umspritzung des Stators mit einer Vergußmasse der Stator auf einfache und kostengünstige Weise an dem Gehäuseunterteil befestigt werden kann.

Erfindungsgemäß wird diese Aufgabe durch ein Motorgehäuse mit den Merkmalen des unabhängigen Anspruches 1 gelöst. Vorteilhafte Weiterbildungen des Motorgehäuses ergeben sich aus den Unteransprüchen 2 - 12. Weiterhin wird die Aufgabe durch einen Elektromotor nach Anspruch 13 gelöst.

Werden keine hohen Anforderungen an Staub- und Feuchtigkeitsschutz der Baugruppe gestellt, kann durch die zu dem Bereich des Rotors hin ausgerichtete Öffnung Luft zu der Elektronik strömen und diese kühlen. Dabei kann sich die Luftleiteinrichtung in axialer Richtung unterhalb der Multifunktionsöffnung in Richtung des Rotors befinden. Aufgrund des vom Rotor im Betrieb ausgehenden Luftstromes und der direkten Kühlung der Elektronik mit diesem Luftstrom kann auf eine zusätzliche Kühlung über Kühlkörper oder Ventilatoren verzichtet werden. Da die Öffnung hinter dem Rotor des Außenläufermotors verborgen ist, ist die Elektronik trotz Kühlöffnung gegen Berühren und starke Verschmutzung geschützt, was bei Öffnungen im Deckelteil nicht gegeben wäre.

Im Falle der Verwendung des Motorgehäuses ohne umspritztem Stator lenkt die Luftleiteinrichtung den vom Rotor im Betrieb erzeugten Luftstrom aktiv durch die Multifunktionsöffnung in Richtung der Elektronik. Die Kühlung der Elektronik wird dadurch maximiert. Im Falle der Verwendung des Motorgehäuses mit umspritztem Stator wirkt die Luftleiteinrichtung als zusätzlicher Hinterschnitt für die Vergußmasse, so dass die Verbindungskraft zwischen Gehäuseunterteil und Stator maximiert wird.

Werden erhöhte Anforderungen an Staub- und Feuchtigkeitsschutz der Baugruppe gestellt, kann der Stator mit einer Vergußmasse umgeben werden. Die Öffnung dient in diesem Fall als Hinterschneidungsöffnung, in die die Verguß- oder Umspritzungsmasse eindringen und diese ausfüllen kann. Durch das Eindringen der Masse in die Multifunktionsbohrung entsteht eine kostengünstige Verbindung zwischen der Masse und dem Gehäuseunterteil. Ist ein Rücksprung auf der dem Gehäuseoberteil zugewandten Seite der Multifunktionsbohrung vorgesehen, kann die Masse in den Rücksprung eindringen, wodurch ein Formschluss bei Aushärtung der Masse entsteht. Hierdurch wird die Zuverlässigkeit der Verbindung zwischen dem Gehäuseunterteil und dem Stator erhöht. Zusätzliche Verbindungselemente wie beispielsweise Schrauben und die dazugehörigen Verbindungsprozesse entfallen. In diesem Fall wird die Öffnung nicht als Kühlöffnung verwendet.

Es hat sich als vorteilhaft erwiesen, wenn das Gehäuseunterteil oberhalb des Stators in Richtung des Gehäuseoberteils tellerförmig in radialer Richtung über den Durchmesser des Stators hinaus ausgedehnt und die Elektronik zwischen Gehäuseunterteil und Gehäuseoberteil aufnehmbar ist, wobei in einem Bereich um den Stator in radialer Richtung ein Rotor mit einem größeren Innendurchmesser als der Außendurchmesser des Stators anordnenbar ist und wobei die Multifunktionsöffnung in axiale Richtung zu dem Bereich des Rotors hin ausgerichtet ist.

In einer vorteilhaften Ausführungsform weist die Multifunktionsöffnung eine im Wesentlichen runde Geometrie auf. Eine runde Geometrie lässt sich fertigungstechnisch leicht herstellen.

In einer alternativen Ausführungsform weist die Multifunktionsöffnung eine im Wesentlichen eckige Geometrie auf. Durch die im Wesentlichen eckige Geometrie kann die Hinterschneidungsfläche gegenüber einer runden Geometrie vergrößert werden, wodurch die Verbindung höher belastbar wird.

Die Luftleiteinrichtung kann symmetrisch ausgeführt sein, so dass sie unabhängig von der Laufrichtung des Rotors den erzeugten Luftstrom durch die Multifunktionsöffnung auf die Elektronik lenkt. Diese Ausführungsform wird vorzugsweise verwendet, wenn die Laufrichtung des Motors veränderbar ist.

In einer alternativen Ausführungsform ist die Luftleiteinrichtung asymmetrisch ausgeführt, so dass der durch den Rotor im Betrieb erzeugte Luftstrom auf die Elektronik bei entsprechender Drehrichtung des Rotors maximiert ist. Diese Ausführungsform wird vorteilhafterweise bei Motoren mit nur einer Laufrichtung verwendet.

Die Luftleiteinrichtung weist Seitenflächen auf, wobei die Seitenflächen gradlinig oder geschwungen ausgeführt sein können.

In einer vorteilhaften Ausführungsform weist das Motorgehäuse mehrere Multifunktionsöffnungen auf, wobei das Gehäuseunterteil auf einem Teilkreis angeordnete Durchbrüche zur mechanischen Verbindung mit dem Stator aufweist und die Multifunktionsöffnungen auf einem Teilkreis mit im Wesentlichen gleichen Durchmesser angeordnet sind. Dieser Teilkreis besitzt einen Durchmesser, der im Wesentlichen dem Außendurchmesser des Stators entspricht, wodurch im Falle der Verwendung der Multifunktionsöffnung als Kühlöffnung ein Luftstrom von dem bewegten Rotor auf die Elektronik gewährleistet ist und im Falle der Verwendung als Befestigungsvorrichtung für den Stator die Vergußmasse nicht weiter als nötig in den Bereich des Rotors eingebracht werden muss und andererseits eine maximale Befestigungskraft erreicht wird.

Sind mehrere Multifunktionsöffnungen vorgesehen, kann mindestens eine Multifunktionsöffnung eine im Wesentlichen runde Geometrie aufweisen, während mindestens eine weitere Multifunktionsöffnung eine im Wesentlichen eckige Geometrie aufweisen kann.

In einer vorteilhaften Ausführungsform weist das Gehäuseunterteil an seiner äußeren radialen Begrenzung eine Nut zur Aufnahme einer Dichtung auf. Die Dichtung kann beispielsweise aus einem O-Ring bestehen. Durch die Verwendung einer Dichtung zwischen Gehäuseober- und Gehäuseunterteil wird der Staub- und/oder Feuchtigkeitsschutz des Motorgehäuses weiter erhöht.

Es hat sich weiterhin als vorteilhaft herausgestellt, wenn das Motorgehäuse aus einem polymeren Werkstoff hergestellt ist. Durch die geringe Wärmeleitfähigkeit polymerer Werkstoffe wird die Elektronik von der Wicklung thermisch entkoppelt.

Ein erfindungsgemäßer Elektromotor weist ein einfindungsgemäßes Motorgehäuse auf.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Motorgehäuse in einer Explosionsdarstellung
- Fig. 2: ein Gehäuseunterteil in dreidimensionaler Darstellung
- Fig. 3: Ausschnitt eines Gehäuseunterteils mit runder Öffnung und asymmetrischer Luftleiteinrichtung in dreidimensionaler Darstellung
- Fig. 4: Ausschnitt eines Gehäuseunterteils mit runder Öffnung und asymmetrischer Luftleiteinrichtung in einer Schnittdarstellung
- Fig. 5: Ausschnitt eines Gehäuseunterteils mit rechteckiger Öffnung und asymmetrischer Luftleiteinrichtung in dreidimensionaler Darstellung
- Fig. 6: Ausschnitt eines Gehäuseunterteils mit rechteckiger Öffnung und asymmetrischer Luftleiteinrichtung in einer Schnittdarstellung
- Fig. 7: Ausschnitt eines Gehäuseunterteils mit runder Öffnung und symmetrischer Luftleiteinrichtung in dreidimensionaler Darstellung
- Fig. 8: Ausschnitt eines Gehäuseunterteils mit runder Öffnung und symmetrischer Luftleiteinrichtung in einer Schnittdarstellung

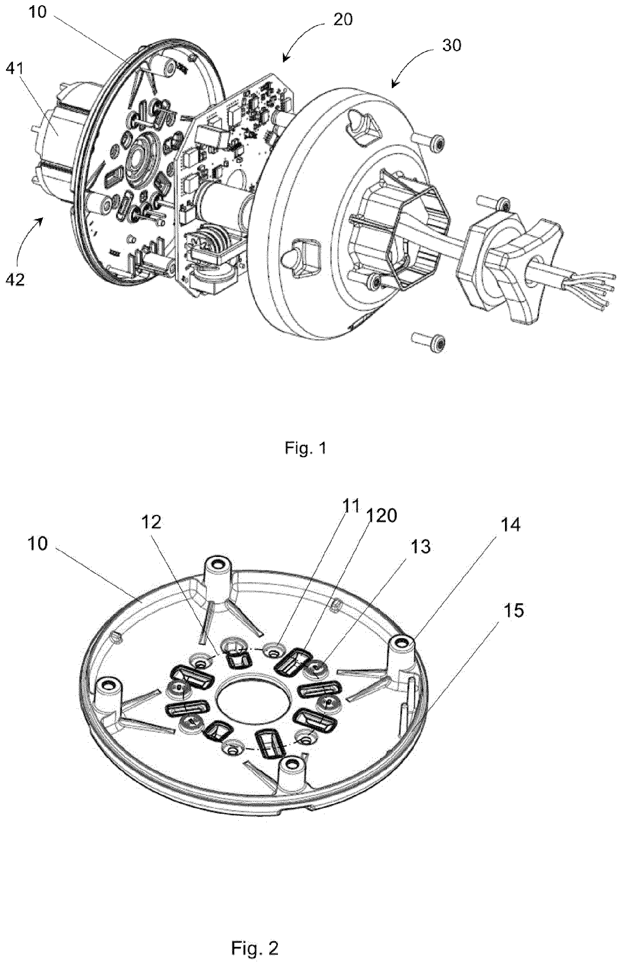

Fig. 1 zeigt ein Motorgehäuse in einer Explosionsdarstellung. Das Motorgehäuse weist ein Gehäuseunterteil 10 und ein Gehäuseoberteil 30 auf, wobei sich zwischen Gehäuseunterteil 10 und Gehäuseoberteil 30 eine Elektronik 20 mit auf einer Platine angeordneten elektronischen Bauelementen befindet. An dem Gehäuseunterteil 10 ist der Stator 41 eines Elektromotors befestigt. Das Gehäuseunterteil 10 weist vier Bohrungen 11 zur mechanischen Verbindung mit dem Stator 41 auf, so dass der Stator 41 mit vier Schrauben mit dem Oberteil 10 verbunden werden kann. Oberhalb des Stators 41 in Richtung Gehäuseoberteil 30 ist das Gehäuseunterteil 10 tellerförmig in radialer Richtung über den Durchmesser des Stators 10 hinaus ausgedehnt, wobei in einem Bereich 42 um den Stator 41 in radialer Richtung ein Rotor (nicht gezeigt) mit einem größeren Innendurchmesser als der Außendurchmesser des Stators 41 anordnenbar ist. Das Gehäuseunterteil 10 weist acht in axialer Richtung zu dem Bereich des Rotors 41 hin ausgerichtete im Wesentlichen rechteckige Multifunktionsöffnungen 120 auf. Die Multifunktionsöffnungen 120 weisen einen Rücksprung 122 auf der dem Gehäuseoberteil 30 zugewandten Seite auf. Der Stator 41 ist nicht mit einer Umspritzungsmasse umgeben und die Multifunktionsöffnungen 120 sind durchgängig, so dass durch die Rotation des Rotors bei Betrieb des Motors Luft durch die Multifunktionsöffnungen 120 zu der Elektronik 20 strömen und diese kühlen kann. Die Multifunktionsöffnungen 120 sind hinter dem Rotor des Außenläufermotors verborgen, wodurch die Elektronik 20 trotz Kühlöffnung 120 gegen Berühren und starke Verschmutzung geschützt ist.

Werden erhöhte Anforderungen an Staub- und Feuchtigkeitsschutz der Baugruppe gestellt, kann der Stator 41 mit einer Vergußmasse umgeben werden (nicht gezeigt). Die Multifunktionsöffnungen 120 dienen in diesem Fall als Hinterschneidungsöffnungen 120, in die die Verguß- oder Umspritzungsmasse eindringen und diese ausfüllen kann. Durch das Eindringen der Masse in den Rücksprung 122 auf der dem Gehäuseoberteil 30 zugewandten Seite des Gehäuseunterteils 10 entsteht ein Formschluss bei Aushärtung der Masse, wodurch eine zuverlässige und kostengünstige Verbindung zwischen dem Gehäuseunterteil 10 und dem Stator 41 entsteht. Zusätzliche Verbindungselemente wie beispielsweise Schrauben und die dazugehörigen Verbindungsprozesse entfallen.

Fig. 2 zeigt das Gehäuseunterteil 10 in einer dreidimensionalen Darstellung. Die vier Bohrungen 11 zur mechanischen Verbindung des Stators 41 mit dem Gehäuseunterteil 10 befinden sich auf einem Teilkreis 12, wobei sich die acht Multifunktionsöffnungen 120 auf demselben Teilkreis 12 befinden.

Weiterhin weist das Gehäuseunterteil 10 vier Dome 14 zur Verschraubung mit dem Gehäuseoberteil 30 auf. Durch die Verschraubung mit dem Gehäuseoberteil 30 entsteht eine sichere Verbindung, wodurch die Elektronik 20 sicher zwischen dem Gehäuseunterteil 10 und dem Gehäuseoberteil 30 einspannbar ist.

Darüber hinaus weist das Gehäuseunterteil 10 vier Kontaktöffnungen 13 auf, durch die die Kontakte des Stators 41 durch das Gehäuseunterteil 10 hindurchtauchen und die Elektronik 20 kontaktieren können.

Umlaufend auf dem äußeren Durchmesser des Gehäuseunterteils 10 befindet sich eine Nut 15, in die eine Dichtung wie beispielsweise ein O-Ring eingelegt werden kann, wodurch bei der Verschraubung des Gehäuseunterteils 10 mit dem Gehäuseoberteil 30 eine feuchtigkeits- und staubdichte Verbindung zwischen den Gehäuseteilen 10,30 herstellbar ist.

Die Multifunktionsöffnungen 120 können im Wesentlichen rund oder im Wesentlichen eckig ausgeführt werden. Darüber hinaus können die Multifunktionsöffnungen 120 Luftleiteinrichtungen 121 aufweisen, die asymmetrisch oder symmetrisch ausgeführt sein können.

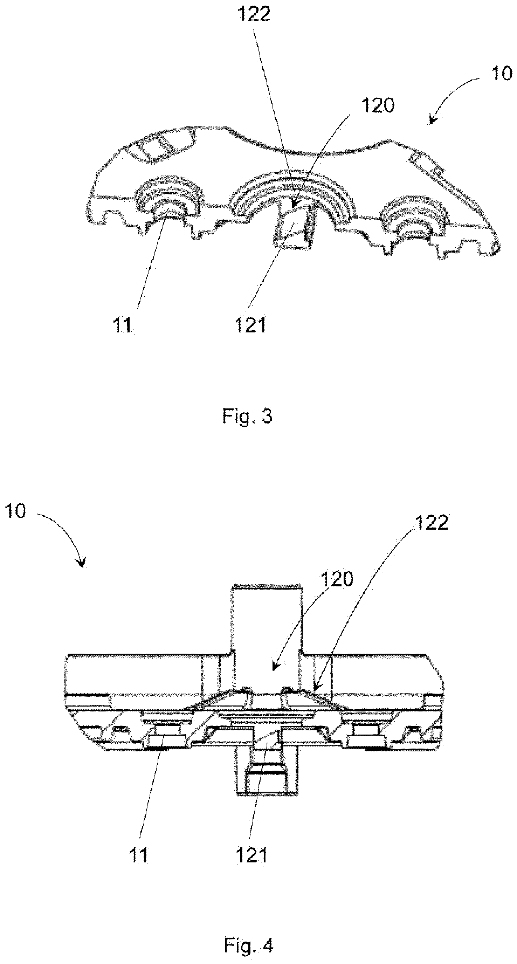

Fig. 3 zeigt einen Ausschnitt eines Gehäuseunterteils 10 mit runder Multifunktionsöffnung 120 und asymmetrischer Luftleiteinrichtung 121 in einer dreidimensionalen Darstellung. Eine runde Geometrie lässt sich fertigungstechnisch leicht herstellen. Die Multifunktionsöffnung 120 weist weiterhin eine sich unterhalb der Multifunktionsöffnung 120 in Richtung des Rotors 41 befindende Luftleiteinrichtung 121 auf. Im Falle der Verwendung des Motorgehäuses ohne umspritzten Stator 41 lenkt die Luftleiteinrichtung 121 den vom Rotor 41 im Betrieb erzeugten Luftstrom aktiv durch die Multifunktionsöffnung 120 in Richtung der Elektronik 20. Die Kühlung der Elektronik 20 wird dadurch maximiert. Im Falle der Verwendung des Motorgehäuses mit umspritztem Stator 41 wirkt die Luftleiteinrichtung 121 als zusätzlicher Hinterschnitt für die Vergußmasse, so dass die Verbindungskraft zwischen Gehäuseunterteil 10 und Stator 41 maximiert wird. Die Luftleiteinrichtung 121 ist asymmetrisch ausgeführt, so dass der durch den Rotor im Betrieb erzeugte Luftstrom auf die Elektronik 20 bei entsprechender Drehrichtung des Rotors maximiert ist.

Fig. 4 zeigt den Ausschnitt des Gehäuseunterteils 10 mit runder Multifunktionsöffnung 120 und asymmetrischer Luftleiteinrichtung 121 aus Fig. 3 in einer Schnittdarstellung, wobei der Rücksprung 122 der Multifunktionsöffnung 120 deutlich erkennbar ist.

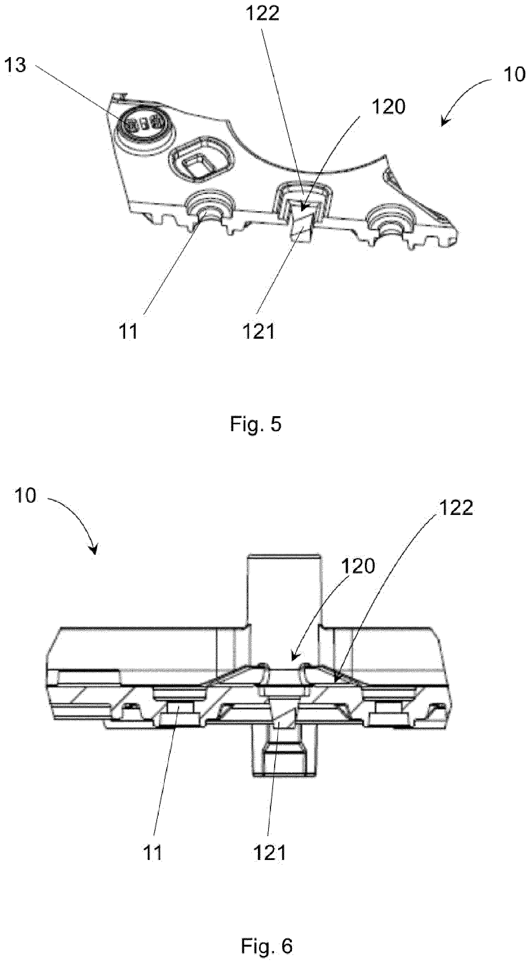

Fig. 5 zeigt einen Ausschnitt eines Gehäuseunterteils 10 mit rechteckiger Multifunktionsöffnung 120 und asymmetrischer Luftleiteinrichtung 121 in einer dreidimensionalen Darstellung, während in Fig. 6 der gleiche Ausschnitt des Gehäuseunterteils 10 in einer Schnittdarstellung zeigt. Durch die rechteckige Geometrie kann die Hinterschneidungsfläche gegenüber einer runden Geometrie vergrößert werden, wodurch die Verbindung höher belastbar wird.

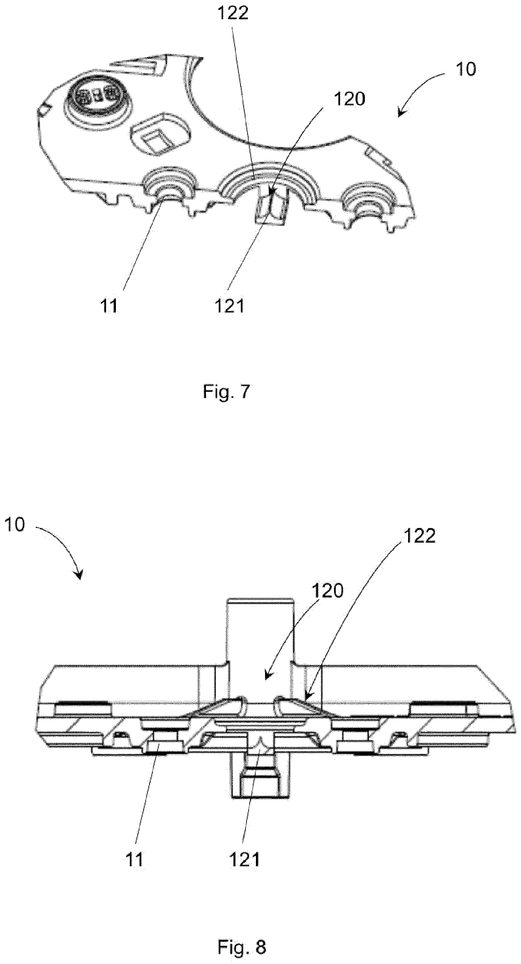

Fig. 7 zeigt einen Ausschnitt eines Gehäuseunterteils 10 mit runder Multifunktionsöffnung 120 und symmetrischer Luftleiteinrichtung 121 in dreidimensionaler Darstellung, während Fig. 8 der gleiche Ausschnitt des Gehäuseunterteils 10 in einer Schnittdarstellung zeigt. Durch die symmetrische Luftleiteinrichtung 121 wird unabhängig von der Laufrichtung des Rotors der erzeugten Luftstrom durch die Multifunktionsöffnung 120 auf die Elektronik 20 lenkt. Das Motorgehäuse ist aus einem Kunststoffwerkstoff hergestellt. Durch die geringe Wärmeleitfähigkeit polymerer Werkstoffe wird die Elektronik von der Wicklung thermisch entkoppelt.

Die hier gezeigten Ausführungsformen stellen nur Beispiele für die vorliegende Erfindung dar und dürfen daher nicht einschränkend verstanden werden.

### Bezugszeichenliste:

- 10: Gehäuseunterteil
- 11: Bohrung
- 12: Teilkreis
- 13: Kontaktöffnung
- 14: Dom
- 15: Nut
- 20: Elektronik
- 30: Gehäuseoberteil
- 41: Stator
- 42: Rotorbereich
- 120: Multifunktionsöffnung
- 121: Luftleiteinrichtung
- 122: Rücksprung

## Patentansprüche

1. Motorgehäuse mit einem Gehäuseunterteil (10) und einem Gehäuseoberteil (30) eines einen Stator (41) aufweisenden Elektromotors, wobei in dem Gehäuseunterteil (10) mindestens eine Öffnung (120) angeordnet ist und in dem Gehäuse eine Elektronik 20 anordenbar ist, **dadurch gekennzeichnet,**
**dass** die Öffnung eine Multifunktionsöffnung ist, die (120) zum Zweck der Kühlung der Elektronik (20) eine Luftleiteinrichtung (121) aufweist, über die ein Luftstrom in Richtung der Elektronik lenkbar ist, und zum Zweck der mechanischen Verbindung des Stators (41) mit dem Gehäuseunterteil (10) einen Rücksprung (122) auf der dem Gehäuseoberteil (30) zugewandten Seite aufweist,.

2. Motorgehäuse nach Anspruch 1,
**dadurch gekennzeichnet,**
**dass** das Gehäuseunterteil (10) oberhalb des Stators (41) in Richtung des Gehäuseoberteils (30) tellerförmig in radialer Richtung über den Durchmesser des Stators hinaus ausgedehnt und die Elektronik (20) zwischen Gehäuseunterteil (10) und Gehäuseoberteil (30) aufnehmbar ist, wobei in einem Bereich (42) um den Stator (41) in radialer Richtung ein Rotor mit einem größeren Innendurchmesser als der Außendurchmesser des Stators anordenbar ist und wobei die Multifunktionsöffnung (120) in axiale Richtung zu dem Bereich (42) des Rotors hin ausgerichtet ist.

3. Motorgehäuse nach einem der vorherigen Ansprüche,
**dadurch gekennzeichnet,**
**dass** die Multifunktionsöffnung (120) eine im Wesentlichen runde Geometrie aufweist.

4. Motorgehäuse nach einem der Ansprüche 1 bis 2,
**dadurch gekennzeichnet,**
**dass** die Multifunktionsöffnung (120) eine im Wesentlichen eckige Geometrie aufweist.

5. Motorgehäuse nach Anspruch 4,
**dadurch gekennzeichnet,**
**dass** die Luftleiteinrichtung (121) symmetrisch ausgeführt ist.

6. Motorgehäuse nach Anspruch 4,
**dadurch gekennzeichnet,**
**dass** die Luftleiteinrichtung (121) asymmetrisch ausgeführt ist

7. Motorgehäuse nach einem der Ansprüche 4 bis 6,
**dadurch gekennzeichnet,**
**dass** die Luftleiteinrichtung (121) gradlinige Seitenflächen aufweist.

8. Motorgehäuse nach einem der Ansprüche 4 bis 6,
**dadurch gekennzeichnet,**
**dass** die Luftleiteinrichtung (121) geschwungene Seitenflächen aufweist

9. Motorgehäuse nach einem der vorherigen Ansprüche,
**dadurch gekennzeichnet,**
**dass** das Motorgehäuse mehrere Multifunktionsöffnungen (120) aufweist, wobei das Gehäuseunterteil (10) auf einem Teilkreis (12) angeordnete Durchbrüche (11) zur mechanischen Verbindung mit dem Stator (41) aufweist und die Multifunktionsöffnungen (120) auf einem Teilkreis (12) mit im Wesentlichen gleichen Durchmesser angeordnet sind.

10. Motorgehäuse nach Anspruch 9,
**dadurch gekennzeichnet,**
**dass** mindestens eine Multifunktionsöffnung (120) eine im Wesentlichen runde Geometrie aufweist, während mindestens eine weitere Multifunktionsöffnung (120) eine im Wesentlichen eckige Geometrie aufweist.

11. Motorgehäuse nach einem der vorherigen Ansprüche,
**dadurch gekennzeichnet,**
**dass** das Gehäuseunterteil (10) eine Nut (15) an seiner äußeren radialen Begrenzung zur Aufnahme einer Dichtung aufweist.

12. Motorgehäuse nach einem der vorherigen Ansprüche,
**dadurch gekennzeichnet,**
**dass** das Motorgehäuse aus einem polymerem Werkstoff hergestellt ist.

13. Elektromotor,
**dadurch gekennzeichnet,**
**dass** der Elektromotor ein Motorgehäuse nach einem der vorherigen Ansprüche aufweist.

## Claims

1. Motor housing having a lower housing section (10) and an upper housing section (30) of an electric motor comprising a stator (41), wherein at least one opening (120) is arranged in the lower housing section (10) and electronics 20 can be arranged in the housing,
**characterised in that**
the opening is a multifunctional opening (120) which, in order to cool the electronics (20), comprises an air-guiding device (121) by means of which an air flow can be guided towards the electronics, and it comprises a recess (122) on the side facing the upper housing section (30) in order to mechanically connect the stator (41) to the lower housing section (10).

2. Motor housing according to claim 1,
**characterised in that**
the lower housing section (10) extends beyond the diameter of the stator in a disc-shaped manner in the radial direction above the stator (41) in the direction of the upper housing section (30), and the electronics (20) can be accommodated between the lower housing section (10) and the upper housing section (30), wherein a rotor with a larger inner diameter than the outer diameter of the stator can be arranged in an area (42) around the stator (41) in the radial direction, and wherein the multifunctional opening (120) is oriented in the axial direction towards the area (42) of the rotor.

3. Motor housing according to one of the preceding claims,
**characterised in that**
the multifunctional opening (120) has a substantially round geometry.

4. Motor housing according to one of claims 1 to 2,
**characterised in that**
the multifunctional opening (120) has a substantially angular geometry.

5. Motor housing according to claim 4,
**characterised in that**
the air-guiding device (121) is configured symmetrically.

6. Motor housing according to claim 4,
**characterised in that**
the air-guiding device (121) is configured asymmetrically.

7. Motor housing according to one of claims 4 to 6,
**characterised in that**
the air-guiding device (121) has rectilinear side surfaces.

8. Motor housing according to one of claims 4 to 6,
**characterised in that**
the air-guiding device (121) has curved side surfaces.

9. Motor housing according to one of the preceding claims,
**characterised in that**
the motor housing has multiple multifunctional openings (120), wherein the lower housing section (10) has through-holes (11) arranged on a pitch circle (12) in order to create a mechanical connection to the stator (41), and the multifunctional openings (120) are arranged on a pitch circle (12) having substantially the same diameter.

10. Motor housing according to claim 9,
**characterised in that**
at least one multifunctional opening (120) has a substantially round geometry, whereas at least one further multifunctional opening (120) has a substantially angular geometry.

11. Motor housing according to one of the preceding claims,
**characterised in that**
the outer radial boundary of the lower housing section (10) has a groove (15) to accommodate a gasket.

12. Motor housing according to one of the preceding claims,
**characterised in that**
the motor housing is made of a polymeric material.

13. Electric motor,
**characterised in that**
the electric motor comprises a motor housing according to one of the preceding claims.

## Revendications

1. Carter moteur avec une partie inférieure de carter (10) et une partie supérieure de carter (30) d'un moteur électrique présentant un stator (41), dans lequel au moins une ouverture (120) est disposée dans la partie inférieure de carter (10) et un système électronique (20) peut être disposé dans le carter,
**caractérisé en ce que**
l'ouverture est une ouverture multifonctionnelle (120), qui présente, aux fins du refroidissement du système électronique (20), un dispositif déflecteur d'air (121), par l'intermédiaire duquel un flux d'air peut être dirigé en direction du système électronique, et qui présente, aux fins de la liaison mécanique du stator (41) à la partie inférieure de carter (10), un décrochement (122) sur le côté tourné vers la partie supérieure de carter (30).

2. Carter moteur selon la revendication 1,
**caractérisé en ce que**
la partie inférieure de carter (10) s'étend au-dessus du stator (41) en direction de la partie supérieure de carter (30) en forme de disque dans une direction radiale au-delà du diamètre du stator et le système électronique (20) peut être logé entre la partie inférieure de carter (10) et la partie supérieure de carter (30), dans lequel un rotor avec un diamètre intérieur plus grand que le diamètre extérieur du stator peut être disposé dans une zone (42) autour du stator (41) dans une direction radiale et dans lequel l'ouverture multifonctionnelle (120) est orientée dans une direction axiale vers la zone (42) du rotor.

3. Carter moteur selon l'une quelconque des revendications précédentes,
**caractérisé en ce que**
l'ouverture multifonctionnelle (120) présente une géométrie sensiblement ronde.

4. Carter moteur selon l'une quelconque des revendications 1 à 2,
**caractérisé en ce que**
l'ouverture multifonctionnelle (120) présente une géométrie sensiblement angulaire.

5. Carter moteur selon la revendication 4,
**caractérisé en ce que**
le dispositif déflecteur d'air (121) est réalisé de manière symétrique.

6. Carter moteur selon la revendication 4,
**caractérisé en ce que**
le dispositif déflecteur d'air (121) est réalisé de manière asymétrique.

7. Carter moteur selon l'une quelconque des revendications 4 à 6,
**caractérisé en ce que**
le dispositif déflecteur d'air (121) présente des surfaces latérales rectilignes.

8. Carter moteur selon l'une quelconque des revendications 4 à 6,
**caractérisé en ce que**
le dispositif déflecteur d'air (121) présente des surfaces latérales galbées.

9. Carter moteur selon l'une quelconque des revendications précédentes,
**caractérisé ne ce que**
le carter moteur présente plusieurs ouvertures multifonctionnelles (120), dans lequel la partie inférieure de carter (10) présente des ajours (11) disposés sur un cercle partiel (12), destinés à être reliés de manière mécanique au stator (41) et les ouvertures multifonctionnelles (120) sont disposées sur un cercle partiel (12) avec un diamètre sensiblement identique.

10. Carter moteur selon la revendication 9,
**caractérisé en ce**
**qu'**au moins une ouverture multifonctionnelle (120) présente une géométrie sensiblement ronde, tandis qu'au moins une autre ouverture multifonctionnelle (120) présente une géométrie sensiblement angulaire.

11. Carter moteur selon l'une quelconque des revendications précédentes,
**caractérisé en ce que**
la partie inférieure de carter (10) présente une rainure (15) au niveau de sa délimitation radiale extérieure servant à recevoir un joint d'étanchéité.

12. Carter moteur selon l'une quelconque des revendications précédentes,
**caractérisé en ce que**
le carter moteur est fabriqué à partir d'un matériau polymère.

13. Moteur électrique,
**caractérisé en ce que**
le moteur électrique présente un carter moteur selon l'une quelconque des revendications précédentes.
